# EUROPEAN PATENT APPLICATION

(11) **EP 4 191 995 A1**
(43) Date of publication of application: **07.06.2023**
(21) Application number: 21851118.6
(22) Date of filing: 16.07.2021
(51) Int. Cl.: H04N 5/232, B60K 35/00, B60W 40/08, G02B 30/31, G08G 1/16, H04N 13/366

(54) **CAMERA SYSTEM AND DRIVING ASSISTANCE SYSTEM**

(30) Priority: 28.07.2020 JP 2020127720
(71) Applicant: Kyocera Corporation, Kyoto-shi Kyoto 612-8501 (JP)
(72) Inventor: KUSAFUKA, Kaoru, Kyoto-shi, Kyoto 612-8501 (JP); SATOU, Akinori, Kyoto-shi, Kyoto 612-8501 (JP)
(74) Representative: TBK
(86) International application number: PCT/JP2021/026793
(87) International publication number: WO 2022/024814

(57) **Abstract**

A driving support system includes a three-dimensional (3D) projector and a driver monitoring apparatus. The driver monitoring apparatus and the 3D projector share a camera system. A camera captures an image of a driver of a vehicle, divides the captured image into a plurality of divisional captured images, and transmits the plurality of divisional captured images separately. A first controller performs a first detection process to detect first information associated with a position of an eye of the driver in response to receiving at least one of the plurality of divisional captured images from the camera. A second controller generates, in response to receiving all of the plurality of divisional captured images from the camera, a captured image by composition, and performs a second detection process to detect second information associated with a driving state of the driver.

## Description

### TECHNICAL FIELD

The present disclosure relates to a camera system and a driving support system.

### BACKGROUND OF INVENTION

Known techniques are described in, for example, Patent Literature 1 and Patent Literature 2.

### CITATION LIST

### PATENT LITERATURE

Patent Literature 1: Japanese Unexamined Patent Application Publication No. 11-304428
Patent Literature 2: Japanese Unexamined Patent Application Publication No. 6-230132

### SUMMARY

A camera system according to one embodiment of the present disclosure includes a camera, a first controller, and a second controller. The camera captures an image of a driver of a vehicle, divides the captured image into a plurality of divisional captured images, and transmits the plurality of divisional captured images separately. The first controller performs a first detection process to detect first information associated with a position of an eye of the driver in response to receiving at least one divisional captured image of the plurality of divisional captured images from the camera. The second controller generates, in response to receiving all of the plurality of divisional captured images from the camera, a captured image by composition, and performs a second detection process to detect second information associated with a driving state of the driver.

A driving support system according to one embodiment of the present disclosure includes the camera system described above, a display, a barrier, a display controller, and a monitor. The display displays a parallax image to be projected to two eyes of a driver. The barrier defines a traveling direction of image light of the parallax image to generate parallax between the two eyes. The display controller controls the display based on the first information. The monitor monitors a driving state of the driver based on the second information.

### BRIEF DESCRIPTION OF THE DRAWINGS

The objects, features, and advantages of the present disclosure will become more apparent from the following detailed description and the drawings.
FIG. 1 is a schematic diagram of an example movable body incorporating a driving support system.
FIG. 2 is a block diagram of the driving support system.
FIG. 3 is a schematic diagram illustrating a first example of image division.
FIG. 4 is a schematic diagram illustrating a second example of image division.
FIG. 5 is a schematic diagram of an example three-dimensional projector.
FIG. 6 is a schematic diagram describing the relationship between the eyes of a driver, a display, and a barrier.
FIG. 7A is a schematic diagram of a camera system including a relay.
FIG. 7B is a schematic diagram of the camera system including the relay.

### DESCRIPTION OF EMBODIMENTS

A vehicle incorporates, as the structure that forms the basis of the present disclosure, a driver monitoring system to, for example, improve the safety of the vehicle and assist autonomous driving control. The driver monitoring system captures an image of a driver with a camera and detects, for example, the posture, face movement, and gaze of the driver to monitor the driving state of the vehicle. An image display system, such as a head-up display, as the structure that forms the basis of the present disclosure displays an image to allow a driver to view, for example, information associated with a vehicle and navigation during driving. The image display system captures the face of a driver with a camera and detects the positions of the pupils.

An embodiment of the present disclosure will now be described in detail with reference to the drawings. The drawings used herein are schematic and are not drawn to scale relative to the actual size of each component.

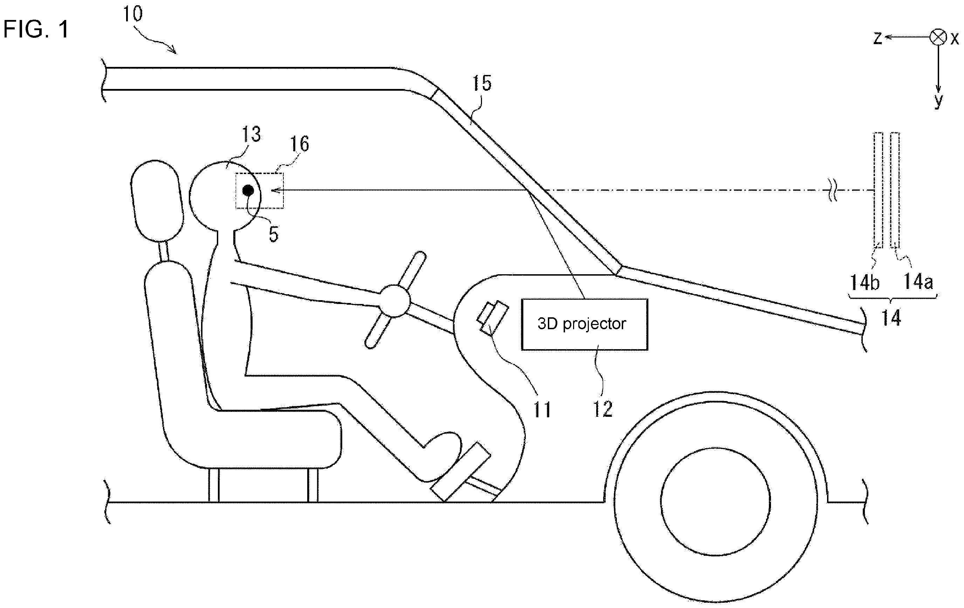

As illustrated in FIG. 1, a movable body 10 incorporates a camera system 50 according to one embodiment of the present disclosure. The camera system 50 includes a camera 11, a first controller 1, and a second controller 2. The movable body 10 may include a driving support system 100 including the camera system 50.

Examples of the movable body in the present disclosure include a vehicle, a vessel, and an aircraft. Examples of the vehicle include an automobile, an industrial vehicle, a railroad vehicle, a community vehicle, and a fixed-wing aircraft traveling on a runway. Examples of the automobile include a passenger vehicle, a truck, a bus, a motorcycle, and a trolley bus. Examples of the industrial vehicle include an industrial vehicle for agriculture and an industrial vehicle for construction. Examples of the industrial vehicle include a forklift and a golf cart. Examples of the industrial vehicle for agriculture include a tractor, a cultivator, a transplanter, a binder, a combine, and a lawn mower. Examples of the industrial vehicle for construction include a bulldozer, a scraper, a power shovel, a crane vehicle, a dump truck, and a road roller. Examples of the vehicle include man-powered vehicles. The classification of the vehicle is not limited to the above examples. Examples of the automobile include an industrial vehicle travelling on a road. One type of vehicle may fall within multiple classes. Examples of the vessel include a jet ski, a boat, and a tanker. Examples of the aircraft include a fixed-wing aircraft and a rotary-wing aircraft.

In the example described below, the movable body 10 is a passenger vehicle. The movable body 10 may be any of the above examples instead of a passenger vehicle. The camera 11 may be attached to the movable body 10. The camera 11 can capture an image of an area including an eye box 16 of a driver 13 of the movable body 10. The eye box 16 is an area in a real space in which eyes 5 of the driver 13 are expected to be located based on, for example, the body shape, the posture, and changes in the posture of the driver 13. The eye box 16 may have any shape. The eye box 16 may include a planar area or a three-dimensional (3D) area. The camera 11 may be attached at any position inside or outside the movable body 10. For example, the camera 11 may be inside a dashboard in the movable body 10.

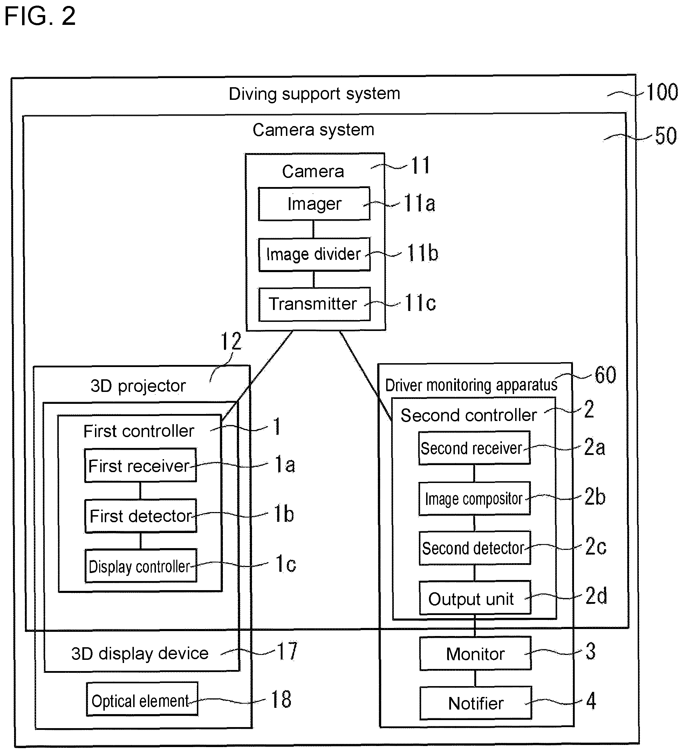

FIG. 2 is a block diagram of a driving support system. The driving support system 100 may include a 3D projector 12 and a driver monitoring apparatus 60. The driving support system 100 may include the camera system 50. The driver monitoring apparatus 60 and the 3D projector 12 share the camera system 50. The camera system 50 includes the camera 11, the first controller 1, and the second controller 2. The first controller 1 is included in the 3D projector 12. The second controller 2 is included in the driver monitoring apparatus 60.

The camera 11 may function both as an infrared camera and a visible light camera. The camera 11 can capture an image of the driver 13 of a vehicle and divide the captured image into divisional images to be transmitted separately. The camera 11 includes, for example, an imager 11a, an image divider 11b, and a transmitter 11c. The imager 11a may include, for example, a charge-coupled device (CCD) image sensor or a complementary metal-oxide semiconductor (CMOS) image sensor. The imager 11a may capture an image of a substantially upper half of the body of the driver 13 including, for example, the face, the shoulders, and the arms. The captured image generated by the imager 11a is output to the image divider 11b. The image divider 11b divides the captured image output from the imager 11a into multiple divisional images. The image divider 11b may divide the captured image into at least two divisional images. Such image division will be described in detail later. The divisional images obtained by the image divider 11b are externally transmitted by the transmitter 11c from the camera 11. The transmitter 11c may separately transmit the multiple divisional images one by one. When the captured image is divided into, for example, two divisional images, the transmitter 11c may first transmit one of the two divisional images and then transmit the other divisional image sequentially. When the captured image is divided into three or more divisional images, the transmitter 11c may also transmit the divisional images sequentially. The image divider 11b may assign an identification code to each of the divisional images.

The captured divisional images are transmitted from the camera 11 to the first controller 1 and the second controller 2. The camera 11 may output the captured divisional images to the 3D projector 12 through wired communication or wireless communication. The wired communication may include, for example, a controller area network (CAN). The first controller 1 may be included in the 3D projector 12. In response to receiving, from the camera 11, at least one of the captured divisional images, the first controller 1 performs a first detection process to detect first information associated with the positions of the eyes 5 of the driver 13. The 3D projector 12 may function as a head-up display. The first information associated with the positions of the eyes 5 of the driver 13 may indicate, for example, the pupil positions. The first detection process may include detecting the pupil positions of the driver 13 based on an image. The second controller 2 may be included in the driver monitoring apparatus 60. In response to receiving all the divisional captured images from the camera 11, the second controller 2 generates the captured image by composition and performs a second detection process to detect second information associated with the driving state of the driver 13. The driver monitoring apparatus 60 may function as a driver monitoring system. The second information associated with the driving state of the driver 13 may indicate, for example, the face orientation of the driver 13 (e.g., the face of the driver 13 looking to a side, looking to the front, or looking down). The second detection process may include detecting the face orientation of the driver 13 based on an image.

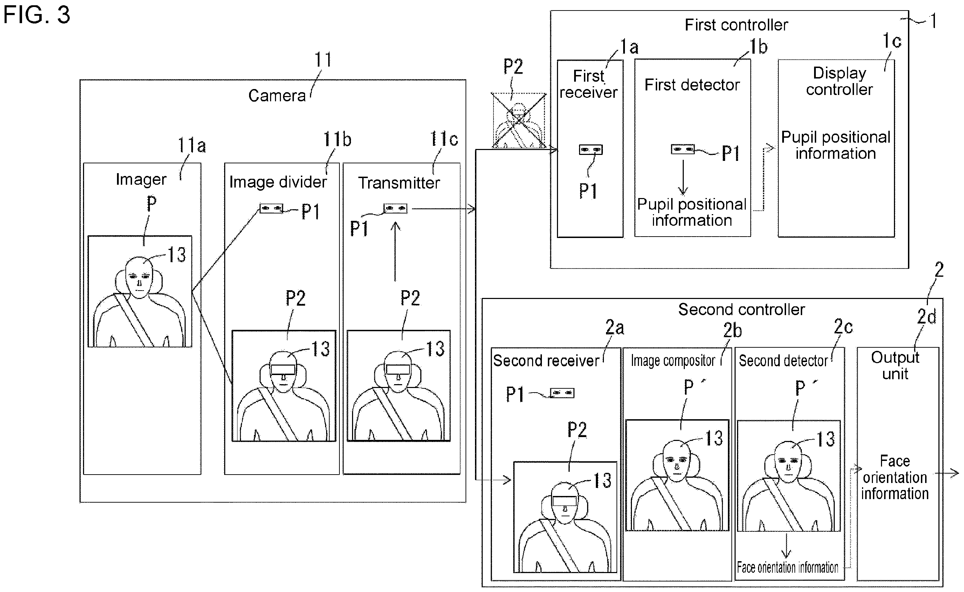

FIG. 3 is a schematic diagram illustrating a first example of image division. The image divider 11b divides a captured image P generated by the imager 11a into a first image P1 including an area expected to include the eyes 5 of the driver 13 and a second image P2 excluding the first image P1. The transmitter 11c transmits the first image P1 before transmitting the second image P2. The first controller 1 and the second controller 2 receive the first image P1 transmitted from the transmitter 11c. In the image division, the image divider 1 1b may change the position of the first image P1 in the captured image P for each captured image P. In this case, information indicating the position of the first image P1 in the captured image P to be divided may be added to the first image P1 to be transmitted. In the image division, the image divider 11b may use the same position as the position of the first image P1 in the captured image P for every captured image P. In this case, the information indicating the position of the first image P1 in the captured image to be divided may not be added to the first image P1 to be transmitted. The information indicating the position of the first image P1 in the captured image P may be prestored in the first controller 1 and the second controller 2.

The first controller 1 includes a first receiver 1a, a first detector 1b, and a display controller 1c. The first receiver 1a receives at least one of the images transmitted from the transmitter 11c in the camera 11. For example, the first receiver 1a may receive, of the divisional images obtained by dividing the captured image P, an image that is first transmitted from the transmitter 11c. The first receiver 1a receiving an image may no longer receive other divisional images obtained by dividing the captured image P. In this example, the first receiver 1a receives the first image P1 that is first transmitted from the transmitter 11c. The first receiver 1a does not receive the second image P2 that is subsequently transmitted from the transmitter 11c. The first detector 1b detects the pupil positions as the first detection process. The first detector 1b can detect the pupil positions based on the first image P1 including the eyes 5 of the driver 13. For the first image P1 with the information indicating the position of the first image P1 in the captured image P being added, the added information may be used. For the first image P1 with the information indicating the position of the first image P1 in the captured image P being added, the first detector 1b obtains pupil positional information using the added information. For the first image P1 without the information indicating the position of the first image P1 in the captured image P, the first detector 1b obtains the pupil positional information using the prestored positional information. The display controller 1c controls image display in the 3D projector 12 based on the pupil positional information detected by the first detector 1b.

The second controller 2 includes a second receiver 2a, an image compositor 2b, a second detector 2c, and an output unit 2d. The second receiver 2a receives all the images transmitted from the transmitter 11c in the camera 11. The image compositor 2b composites all the images received by the second receiver 2a and generates a composite captured image P'. In this example, the second receiver 2a receives the first image P1 and the second image P2 that are transmitted from the transmitter 11c. The image compositor 2b composites the first image P1 and the second image P2 received by the second receiver 2a and generates the composite captured image P'. The second detector 2c performs the second detection process based on the composite captured image P' composite by the image compositor 2b. The captured image P includes, for example, the upper half of the body of the driver 13 and thus allows detection of the face orientation of the driver 13. The output unit 2d outputs information about the face orientation detected by the second detector 2c.

The first information associated with the positions of the eyes of a driver used in the 3D projector 12 is to be detected faster than the second information associated with the driving state of the driver used in the driver monitoring apparatus 60. The first controller 1 can perform the first detection process and detect the first information by simply receiving at least one of the images transmitted from the camera 11. The second controller 2 can perform the second detection process and detect the second information by receiving all the images transmitted from the camera 11 and compositing the images together. The first detection process allows faster detection than the second detection process. This allows transmission of images appropriate for the two different detection processes, thus improving the processing speed.

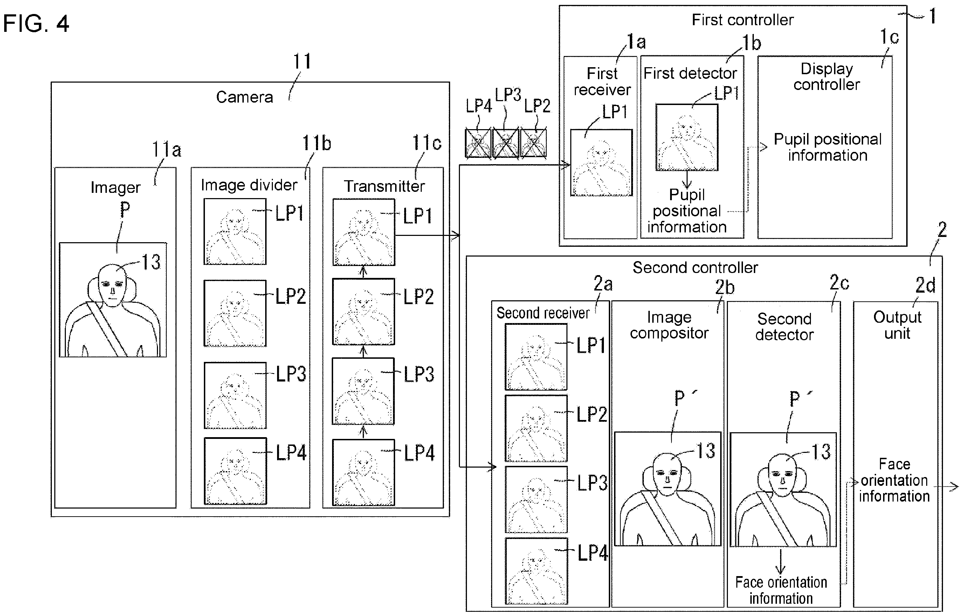

FIG. 4 is a schematic diagram illustrating a second example of image division. The image divider 11b divides the captured image P generated by the imager 11a into multiple downsampled images each including a smaller number of pixels than the captured image P. In this example, the image divider 11b divides the captured image P into four downsampled images LP1 to LP4. The number of pixels in each of the downsampled images LP1 to LP4 is a quarter of the number of pixels in the captured image P. For example, three pixels of four consecutive pixels are removed. This processing is repeated every four pixels to obtain the downsampled image LP1 with a quarter of the number of pixels. The downsampled images LP2 to LP4 are each obtained by removing, of four consecutive pixels in each set, three pixels at positions different from previously removed three pixels, or in other words, retaining, in each set of four such pixels, a single pixel at a position different from a previously retained pixel. The transmitter 11c transmits the downsampled images LP1 to LP4 sequentially. The first controller 1 and the second controller 2 receive the downsampled image LP1 that is first transmitted from the transmitter 11c.

The first receiver 1a in the first controller 1 receives the downsampled image LP1 that is first transmitted from the transmitter 11c. The first receiver 1a does not receive the downsampled images LP2 to LP4 that are subsequently transmitted from the transmitter 11c. The first detector 1b can detect the pupil positions based on the downsampled image LP1. The display controller 1c controls image display in the 3D projector 12 based on the pupil positional information detected by the first detector 1b.

The second receiver 2a in the second controller 2 receives all the downsampled images LP1 to LP4 that are transmitted from the transmitter 11c. The image compositor 2b composites the downsampled images LP1 to LP4 received by the second receiver 2a and generates the composite captured image P'. The second detector 2c performs the second detection process based on the composite captured image P' composited by the image compositor 2b. The captured image P includes, for example, the upper half of the body of the driver 13 and thus allows detection of the face orientation of the driver 13. The output unit 2d outputs information about the face orientation detected by the second detector 2c.

The camera system 50 may include, for example, a sensor. The sensor may be, for example, an ultrasonic sensor or an optical sensor. The camera system 50 may detect the position of the head of the driver 13 with the sensor, and may detect the pupil positions of the driver 13 based on the position of the head. The camera 11 may use two or more sensors to detect the pupil positions of the driver 13 using coordinates in a 3D space.

The first controller 1 and the second controller 2 may be, for example, processors. The first controller 1 and the second controller 2 may include one or more processors. The processors may include a general-purpose processor that reads a specific program to perform a specific function, and a processor dedicated to specific processing. The dedicated processor may include an ASIC (application-specific integrated circuit). The processors may include a programmable logic device (PLD). The PLD may include a field-programmable gate array (FPGA). The first controller 1 may be either a system on a chip (SoC) or a system in a package (an SiP) in which one or more processors cooperate with other components.

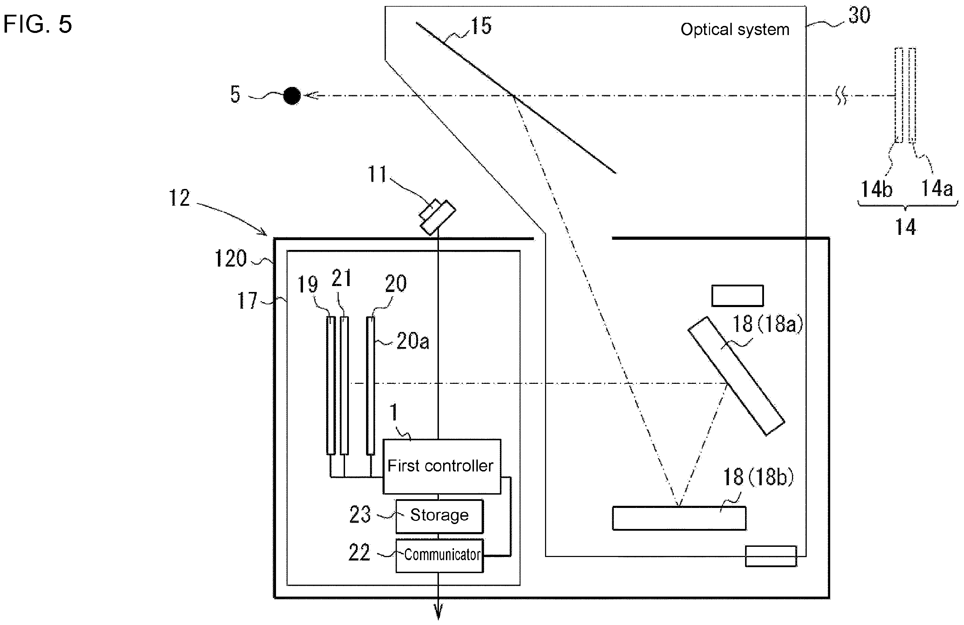

The 3D projector 12 will now be described. FIG. 5 is a schematic diagram of an example 3D projector. The 3D projector 12 may control an image to be projected based on the pupil positional information that is the first information. The 3D projector 12 may be at any position inside or outside the movable body 10. For example, the 3D projector 12 may be inside the dashboard in the movable body 10. The 3D projector 12 emits image light toward a windshield 15. The image light may be emitted, for example, through an opening in a housing 120.

The windshield 15 reflects image light emitted from the 3D projector 12. The image light reflected from the windshield 15 reaches the eye box 16. The solid arrow in FIG. 1 indicates a path traveled by at least a part of image light emitted from the 3D projector 12 to reach the eye box 16. The path traveled by image light is also referred to as an optical path. With the eyes 5 of the driver 13 located in the eye box 16 receiving image light, the driver 13 can view a virtual image 14. The virtual image 14 is on the dot-dash line extending frontward from the path extending from the windshield 15 to the eyes 5. The 3D projector 12 can function as a head-up display that enables the driver 13 to view the virtual image 14. In FIG. 1, the direction in which the eyes 5 of the driver 13 are aligned corresponds to x-direction. The vertical direction corresponds to y-direction.

As illustrated in FIG. 5, the 3D projector 12 includes a 3D display device 17 and an optical element 18. The 3D display device 17 may include a backlight 19, a display 20 including a display surface 20a, a barrier 21, and the first controller 1. The 3D display device 17 may further include a communicator 22. The 3D display device 17 may further include a storage 23. The 3D projector 12 may include, for example, the housing 120. The housing 120 accommodates the 3D display device 17 and the optical element 18.

The optical element 18 may include a first mirror 18a and a second mirror 18b. At least one of the first mirror 18a or the second mirror 18b may have optical power. In the present embodiment, the first mirror 18a is a concave mirror having optical power. The second mirror 18b is a plane mirror. The optical element 18 may function as a magnifying optical system that magnifies an image displayed by the 3D display device 17. The arrowed dot-dash line in FIG. 5 indicates the traveling path of at least a part of image light emitted from the 3D display device 17 to be reflected from the first mirror 18a and the second mirror 18b and then exit the 3D projector 12. The image light emitted from the 3D projector 12 reaches the windshield 15, is reflected from the windshield 15, and then reaches the eyes 5 of the driver 13. This allows the driver 13 to view the image displayed by the 3D display device 17.

The optical element 18 and the windshield 15 allow image light emitted from the 3D display device 17 to reach the eyes 5 of the driver 13. The optical element 18 and the windshield 15 may be included in an optical system 30. In other words, the optical system 30 includes the optical element 18 and the windshield 15. The optical system 30 allows image light emitted from the 3D display device 17 to travel along the optical path indicated by the dot-dash line and reach the eyes 5 of the driver 13. The optical system 30 may control the traveling direction of image light to enlarge or reduce an image viewable by the driver 13. The optical system 30 may control the traveling direction of image light to deform an image viewable by the driver 13 based on a predetermined matrix.

The optical element 18 may have a structure different from the illustrated structure. The optical element 18 may include a concave mirror, a convex mirror, or a plane mirror. The concave mirror or the convex mirror may be at least partially spherical or aspherical. The optical element 18 may include one component or may include three or more components, instead of two components. The optical element 18 may include a lens instead of or in addition to a mirror. The lens may be a concave lens or a convex lens. The lens may be at least partially spherical or aspherical.

The backlight 19 is more away from the driver 13 than the display 20 and the barrier 21 on the optical path of image light. The backlight 19 emits light toward the barrier 21 and the display 20. At least a part of light emitted from the backlight 19 travels along the optical path indicated by the dot-dash line and reaches the eyes 5 of the driver 13. The backlight 19 may include a light emitter such as a light-emitting diode (LED), an organic EL element, or an inorganic EL element. The backlight 19 may have any structure that allows control of the light intensity and the light intensity distribution.

The display 20 includes a display panel. The display 20 may be, for example, a liquid-crystal device such as a liquid-crystal display (LCD). In the present embodiment, the display 20 includes a transmissive liquid-crystal display panel. The display 20 is not limited to this, and may include any of various display panels.

The display 20 includes multiple pixels and controls the transmittance of light from the backlight 19 incident on each pixel to emit image light that then reaches the eyes 5 of the driver 13. The driver 13 views an image formed by image light emitted from each pixel in the display 20.

The barrier 21 defines the traveling direction of incident light. With the barrier 21 nearer the backlight 19 than the display 20, light emitted from the backlight 19 enters the barrier 21 and then enters the display 20. In this case, the barrier 21 blocks or attenuates a part of light emitted from the backlight 19 and transmits another part of the light to the display 20. The display 20 emits incident light traveling in the direction defined by the barrier 21 as image light traveling in the same direction. With the display 20 nearer the backlight 19 than the barrier 21, light emitted from the backlight 19 enters the display 20 and then enters the barrier 21. In this case, the barrier 21 blocks or attenuates a part of image light emitted from the display 20 and transmits another part of the image light to the eyes 5 of the driver 13.

Independently of whether the display 20 or the barrier 21 is nearer the driver 13, the barrier 21 can control the traveling direction of image light. The barrier 21 allows a part of image light emitted from the display 20 to reach one of the left eye 5L and the right eye 5R (refer to FIG. 4) of the driver 13, and another part of the image light to reach the other of the left eye 5L and the right eye 5R of the driver 13. In other words, the barrier 21 directs at least a part of image light toward the left eye 5L of the driver 13 and toward the right eye 5R of the driver 13. The left eye 5L is also referred to as a first eye, and the right eye 5R as a second eye. In the present embodiment, the barrier 21 is located between the backlight 19 and the display 20. In other words, light emitted from the backlight 19 first enters the barrier 21 and then enters the display 20.

The barrier 21 defines the traveling direction of image light to allow each of the left eye 5L and the right eye 5R of the driver 13 to receive different image light. Each of the left eye 5L and the right eye 5R of the driver 13 can thus view a different image.

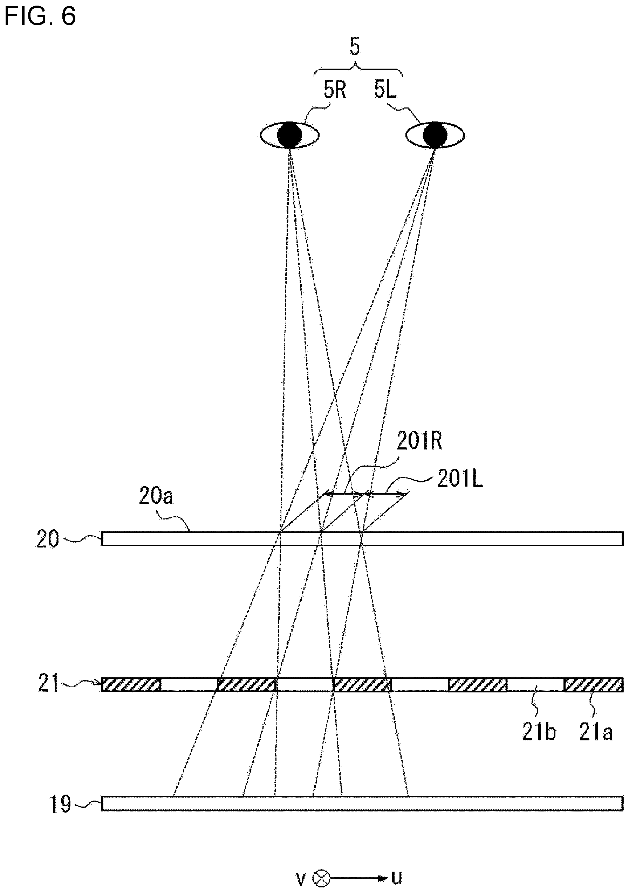

FIG. 6 is a schematic diagram describing the relationship between the eyes of a driver, a display, and a barrier. As illustrated in FIG. 6, the display 20 includes left-eye viewing areas 201L viewable by the left eye 5L of the driver 13 and right-eye viewing areas 201R viewable by the right eye 5R of the driver 13 on the display surface 20a. The display 20 displays a parallax image including left-eye images viewable by the left eye 5L of the driver 13 and right-eye images viewable by the right eye 5R of the driver 13. A parallax image refers to an image projected to the left eye 5L and the right eye 5R of the driver 13 to provide parallax between the two eyes of the driver 13. The display 20 displays left-eye images on the left-eye viewing areas 201L and right-eye images on the right-eye viewing areas 201R. In other words, the display 20 displays a parallax image on the left-eye viewing areas 201L and the right-eye viewing areas 201R. The left-eye viewing areas 201L and the right-eye viewing areas 201R are arranged in u-direction indicating a parallax direction. The left-eye viewing areas 201L and the right-eye viewing areas 201R may extend in v-direction orthogonal to the parallax direction, or in a direction inclined with respect to v-direction at a predetermined angle. In other words, the left-eye viewing areas 201L and the right-eye viewing areas 201R may be arranged alternately in a predetermined direction including a component in the parallax direction. The pitch between the alternately arranged left-eye viewing areas 201L and right-eye viewing areas 201R is also referred to as a parallax image pitch. The left-eye viewing areas 201L and the right-eye viewing areas 201R may be spaced from each other or adjacent to each other. The display 20 may further include a display area to display a planar image on the display surface 20a. The planar image provides no parallax between the eyes 5 of the driver 13 and is not viewed stereoscopically.

As illustrated in FIG. 6, the barrier 21 includes open portions 21b and light-blocking portions 21a. The barrier 21 located nearer the driver 13 than the display 20 on the optical path of image light controls the transmittance of image light emitted from the display 20. The open portions 21b transmit light entering the barrier 21 from the display 20. The open portions 21b may transmit light with a transmittance of a first predetermined value or greater. The first predetermined value may be, for example, 100% or a value close to 100%. The light-blocking portions 21a block light entering the barrier 21 from the display 20. The light-blocking portions 21a may transmit light with a transmittance of a second predetermined value or less. The second predetermined value may be, for example, 0% or a value close to 0%. The first predetermined value is greater than the second predetermined value.

The open portions 21b and the light-blocking portions 21a are arranged alternately in u-direction indicating the parallax direction. The boundaries between the open portions 21b and the light-blocking portions 21a may extend in v-direction orthogonal to the parallax direction as illustrated in FIG. 6, or in a direction inclined with respect to v-direction at a predetermined angle. In other words, the open portions 21b and the light-blocking portions 21a may be arranged alternately in a predetermined direction including a component in the parallax direction.

In the present embodiment, the barrier 21 is more away from the driver 13 than the display 20 on the optical path of image light. The barrier 21 controls the transmittance of light directed from the backlight 19 to the display 20. The open portions 21b transmit light directed from the backlight 19 to the display 20. The light-blocking portions 21a block light directed from the backlight 19 to the display 20. This structure allows light entering the display 20 to travel in a predetermined direction. Thus, the barrier 21 can control a part of image light to reach the left eye 5L of the driver 13, and another part of the image light to reach the right eye 5R of the driver 13.

The barrier 21 may include a liquid crystal shutter. The liquid crystal shutter can control the transmittance of light in accordance with a voltage applied. The liquid crystal shutter may include multiple pixels and control the transmittance of light for each pixel. The liquid crystal shutter can form an area with high light transmittance or an area with low light transmittance in an intended shape. The open portions 21b in the barrier 21 including a liquid crystal shutter may have a transmittance of the first predetermined value or greater. The light-blocking portions 21a in the barrier 21 including a liquid crystal shutter may have a transmittance of the second predetermined value or less. The first predetermined value may be greater than the second predetermined value. The ratio of the second predetermined value to the first predetermined value may be set to 1/100 in one example. The ratio of the second predetermined value to the first predetermined value may be set to 1/1000 in another example. The barrier 21 including the open portions 21b and the light-blocking portions 21a that can shift is also referred to as an active barrier.

The first controller 1 controls the display 20. The first controller 1 may control the barrier 21 that is an active barrier. The first controller 1 may control the backlight 19. The display controller 1c in the first controller 1 controls the display 20 based on the pupil positional information detected by the first detector 1b. The first controller 1 may control at least one of the barrier 21 or the backlight 19 based on the pupil positional information.

The communicator 22 may include an interface that can communicate with an external device. The communicator 22 may obtain, for example, information about images from the external device and output the information to the first controller 1. The interface that can perform communication in the present disclosure may include, for example, a physical connector and a wireless communication device. The physical connector may include an electric connector for transmission with electric signals, an optical connector for transmission with optical signals, and an electromagnetic connector for transmission with electromagnetic waves. The electric connector may include a connector complying with IEC 60603, a connector complying with the USB standard, or a connector used for an RCA terminal. The electric connector may include a connector used for an S terminal specified by EIAJ CP-121aA or a connector used for a D terminal specified by EIAJ RC-5237. The electric connector may include a connector complying with the HDMI (registered trademark) standard or a connector used for a coaxial cable including a BNC (British Naval Connector, also known as, for example, a Baby-series N Connector). The optical connector may include a connector complying with IEC 61754. The wireless communication device may include a wireless communication device complying with the Bluetooth (registered trademark) standard and a wireless communication device complying with other standards including IEEE 8021a. The wireless communication device includes at least one antenna.

The storage 23 may store various information sets or programs for causing the components of the 3D display device 17 to operate. The storage 23 may include, for example, a semiconductor memory. The storage 23 may function as a work memory for the first controller 1. The storage 23 may be included in the first controller 1.

As illustrated in FIG. 6, light emitted from the backlight 19 passes through the barrier 21 and the display 20 to reach the eyes 5 of the driver 13. The broken lines indicate the paths traveled by light from the backlight 19 to reach the eyes 5. The light through the open portions 21b in the barrier 21 to reach the right eye 5R passes through the right-eye viewing areas 201R in the display 20. In other words, light through the open portions 21b allows the right eye 5R to view the right-eye viewing areas 201R. The light through the open portions 21b in the barrier 21 to reach the left eye 5L passes through the left-eye viewing areas 201L in the display 20. In other words, light through the open portions 21b allows the left eye 5L to view the left-eye viewing areas 201L.

The display 20 displays right-eye images on the right-eye viewing areas 201R and left-eye images on the left-eye viewing areas 201L. Thus, the barrier 21 allows image light for the left-eye images to reach the left eye 5L and image light for the right-eye images to reach the right eye 5R. More specifically, the open portions 21b allow image light for the left-eye images to reach the left eye 5L of the driver 13 and image light for the right-eye images to reach the right eye 5R of the driver 13. The 3D display device 17 with this structure can project a parallax image to the two eyes of the driver 13. The driver 13 views a parallax image with the left eye 5L and the right eye 5R to view the image stereoscopically.

Image light passing through the open portions 21b in the barrier 21 and emitted from the display surface 20a of the display 20 at least partially reaches the windshield 15 through the optical element 18. The image light is reflected from the windshield 15 and reaches the eyes 5 of the driver 13. This allows the eyes 5 of the driver 13 to view a first virtual image 14a located more away in the negative z-direction than the windshield 15. The first virtual image 14a corresponds to the image appearing on the display surface 20a. The open portions 21b and the light-blocking portions 21a in the barrier 21 form a second virtual image 14b in front of the windshield 15 and closer to the windshield 15 than the first virtual image 14a. As illustrated in FIG. 5, the driver 13 can view an image with the display 20 appearing to be at the position of the first virtual image 14a and the barrier 21 appearing to be at the position of the second virtual image 14b.

The 3D display device 17 emits image light for the image appearing on the display surface 20a in the direction defined by the barrier 21. The optical element 18 directs the image light to the windshield 15. The optical element 18 may reflect or refract the image light. The windshield 15 reflects the image light to direct the light to the eyes 5 of the driver 13. The image light entering the eyes 5 of the driver 13 causes the driver 13 to view a parallax image as the virtual image 14. The driver 13 views the virtual image 14 stereoscopically. An image corresponding to the parallax image in the virtual image 14 is also referred to as a parallax virtual image. The parallax virtual image is a parallax image projected through the optical system 30. An image corresponding to the planar image in the virtual image 14 is also referred to as a planar virtual image. The planar virtual image is a planar image projected through the optical system 30.

The driver monitoring apparatus 60 will now be described. As illustrated in FIG. 2, the driver monitoring apparatus 60 includes the second controller 2, a monitor 3, and a notifier 4. As described above, the output unit 2d in the second controller 2 outputs the second information detected by the second detector 2c. The second information is associated with the driving state of a driver. The monitor 3 determines the driving state of the driver 13 based on the second information and determines whether a notification such as a warning is to be provided to the driver 13. In response to the monitor 3 determining that a notification is to be provided to the driver 13, the notifier 4 provides, for example, a warning. The warning notification includes, for example, displaying a warning message, displaying a warning image, reading a warning message with a voice, and outputting an alarm sound. When the second information indicates, for example, the face orientation of the driver 13, the monitor 3 may determine whether the driver 13 is engaging in normal driving or distracted driving based on the information about the face orientation. For the driver 13 engaging in distracted driving, the monitor 3 may determine that a warning is to be provided, and the notifier 4 may provide the warning to the driver 13.

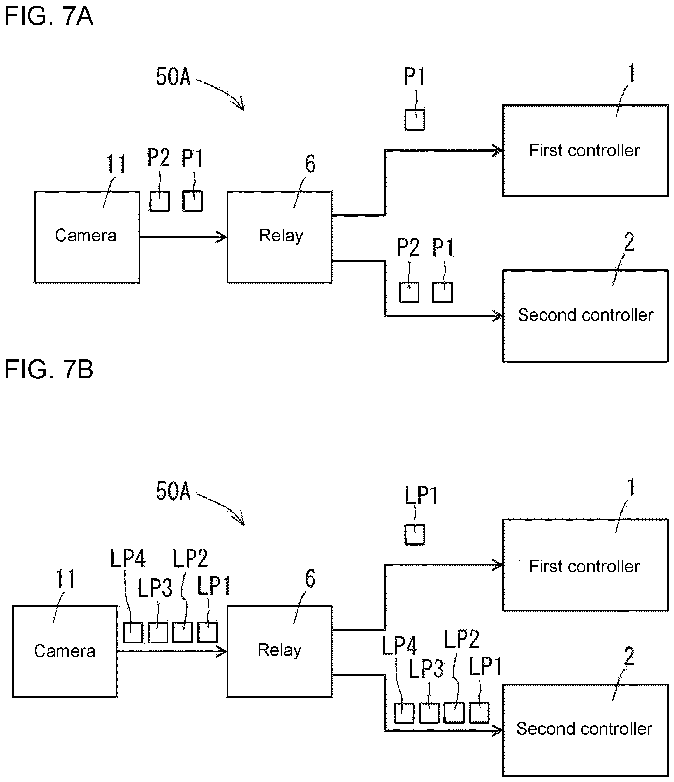

Another example camera system will now be described. FIGs. 7A and 7B are schematic diagrams of a camera system including a relay. FIG. 7A illustrates a camera system 50A in the first example of image division. FIG. 7B illustrates the camera system 50A in the second example of image division. The camera system 50A differs from the above camera system 50 in including a relay 6. The camera system 50A includes the camera 11, the relay 6, the first controller 1, and the second controller 2. The relay 6 receives images transmitted from the camera 11 and transmits the received images to the first controller 1 and the second controller 2. The images from the camera 11 received by the relay 6 are obtained by the camera 11 dividing a captured image in the same manner as above. The relay 6 may select, from the images received from the camera 11, images to be transmitted to the first controller 1 and the second controller 2. The relay 6 may transmit an image received from the camera 11 first to the first controller 1 and the second controller 2, and transmit subsequently received images to the second controller 2 without transmitting them to the first controller 1.

In the first example of image division, the camera 11 transmits the first image P1 and the second image P2 sequentially. The relay 6 receives the first image P1 and the second image P2 sequentially. The relay 6 transmits the first image P1 to the first controller 1 and the first image P1 and the second image P2 to the second controller 2. In response to receiving the first image P1, the relay 6 may transmit the first image P1 to the first controller 1 independently of whether the relay 6 receives the second image P2. In the above camera system 50, the first controller 1 determines to receive no second image P2 after receiving the first image P1. In the camera system 50A, the relay 6 transmits, to the first controller 1, the first image P1 alone and does not transmit the second image P2. The first controller 1 may receive the first image P1 transmitted from the relay 6 alone and may not determine to receive no second image P2.

In the second example of image division, the camera 11 transmits the downsampled images LP1 to LP4 sequentially. The relay 6 receives the downsampled images LP1 to LP4 sequentially. For example, the image received by the relay 6 first from the camera 11 is the downsampled image LP1. The relay 6 transmits the downsampled image LP1 to the first controller 1 and the downsampled images LP1 to LP4 to the second controller 2. In response to receiving the downsampled image LP1, the relay 6 may transmit the downsampled image LP1 to the first controller 1 independently of whether the relay 6 receives the other downsampled images LP2 to LP4. The relay 6 may transmit a downsampled image received from the camera 11 first to the first controller 1. In the above camera system 50, the first controller 1 determines to receive no downsampled images LP2 to LP4 after receiving the downsampled image LP1. In the camera system 50A, the relay 6 transmits the downsampled image LP1 alone to the first controller 1. The first controller 1 may receive the downsampled image LP1 transmitted from the relay 6 alone and may not determine to receive no downsampled images LP2 to LP4.

The structure according to the present disclosure is not limited to the structure described in the above embodiments, but may be modified or altered variously. For example, the functions of the components are reconfigurable unless any contradiction arises. Multiple components may be combined into a single unit, or a single component may be divided into separate units.

In the present disclosure, the first, the second, or others are identifiers for distinguishing the components. The identifiers of the components distinguished with the first, the second, and others in the present disclosure are interchangeable. For example, the first eye can be interchangeable with the second eye. The identifiers are to be interchanged together. The components for which the identifiers are interchanged are also to be distinguished from one another. The identifiers may be eliminated. The components without such identifiers can be distinguished with reference numerals. The identifiers such as the first and the second in the present disclosure alone should not be used to determine the order of components or to suggest the existence of smaller or larger number identifiers.

In the present disclosure, x-axis, y-axis, and z-axis are used for ease of explanation and may be interchangeable with one another. The orthogonal coordinate system including x-axis, y-axis, and z-axis is used to describe the structures according to the present disclosure. The positional relationship between the components in the present disclosure is not limited to being orthogonal.

The present disclosure may be implemented in the following forms.

A camera system according to one embodiment of the present disclosure includes a camera, a first controller, and a second controller. The camera captures an image of a driver of a vehicle, divides the captured image into a plurality of divisional captured images, and transmits the plurality of divisional captured images separately. The first controller performs a first detection process to detect first information associated with a position of an eye of the driver in response to receiving at least one divisional captured image of the plurality of divisional captured images from the camera. The second controller generates, in response to receiving all of the plurality of divisional captured images from the camera, a captured image by composition, and performs a second detection process to detect second information associated with a driving state of the driver.

A driving support system according to one embodiment of the present disclosure includes the camera system described above, a display, a barrier, a display controller, and a monitor. The display displays a parallax image to be projected to two eyes of a driver. The barrier defines a traveling direction of image light of the parallax image to generate parallax between the two eyes. The display controller controls the display based on the first information. The monitor monitors a driving state of the driver based on the second information.

The camera system according to one embodiment of the present disclosure transmits images appropriate for the two different detection processes, thus improving the processing speed for such detection.

The driving support system according to one embodiment of the present disclosure improves the processing speed in displaying a parallax image and monitoring a driving state.

Although embodiments of the present disclosure have been described in detail, the present disclosure is not limited to the embodiments described above, and may be changed or modified in various manners without departing from the spirit and scope of the present disclosure. The components described in the above embodiments may be entirely or partially combined as appropriate unless any contradiction arises.

### REFERENCE SIGNS

- 1: first controller
- 1a: first receiver
- 1b: first detector
- 1c: display controller
- 2: second controller
- 2a: second receiver
- 2b: image compositor
- 2c: second detector
- 2d: output unit
- 3: monitor
- 4: notifier
- 5: eye (5L: left eye, 5R: right eye)
- 6: relay
- 10: movable body
- 11: camera
- 11a: imager
- 11b: image divider
- 11c: transmitter
- 12: 3D projector
- 13: driver
- 14: virtual image (14a: first virtual image, 14b: second virtual image)
- 15: windshield
- 16: eye box
- 17: 3D display device
- 18: optical element (18a: first mirror, 18b: second mirror)
- 19: backlight
- 20: display (20a: display surface)
- 201L: left-eye viewing area
- 201R: right-eye viewing area
- 21: barrier (21a: light-blocking portion, 21b: open portion)
- 22: communicator
- 23: storage
- 30: optical system
- 50, 50A: camera system
- 60: driver monitoring apparatus
- 100: driving support system

## Claims

1. A camera system, comprising:
a camera configured to capture an image of a driver of a vehicle, divide the captured image into a plurality of divisional captured images, and transmit the plurality of divisional captured images separately;
a first controller configured to perform a first detection process to detect first information associated with a position of an eye of the driver in response to receiving at least one divisional captured image of the plurality of divisional captured images from the camera; and
a second controller configured to generate, in response to receiving all of the plurality of divisional captured images from the camera, a composited captured image by composition, and perform a second detection process to detect second information associated with a driving state of the driver.

2. The camera system according to claim 1, wherein
the camera divides the captured image into a first image including an area expected to include the eye of the driver and a second image excluding the first image, and transmits the first image before transmitting the second image.

3. The camera system according to claim 2, wherein
the first controller receives the first image without receiving the second image.

4. The camera system according to claim 2, further comprising:
a relay configured to transmit, of the first image and the second image transmitted from the camera, the first image to the first controller without transmitting the second image.

5. The camera system according to claim 1, wherein
the camera divides the captured image into a plurality of downsampled images each including a smaller number of pixels than the captured image.

6. The camera system according to claim 5, wherein
the first controller receives at least one downsampled image of the plurality of downsampled images, and subsequently avoids receiving the other downsampled images.

7. The camera system according to claim 5, further comprising:
a relay configured not to transmit, after transmitting at least one downsampled image of the plurality of downsampled images transmitted from the camera, the other downsampled images.

8. A driving support apparatus, comprising:
the camera system according to any one of claims 1 to 7;
a display configured to display a parallax image to be projected to two eyes of a driver;
a barrier configured to define a traveling direction of image light of the parallax image to generate parallax between the two eyes;
a display controller configured to control the display based on the first information; and
a monitor configured to monitor a driving state of the driver based on the second information.
